# EUROPEAN PATENT SPECIFICATION

(11) **EP 2 590 768 B1**
(45) Date of publication and mention of the grant of the patent: **22.02.2017**
(21) Application number: 10731738.0
(22) Date of filing: 09.07.2010
(51) Int. Cl.: B23B 27/16

(54) **CUTTING TOOLS AND TOOLHOLDERS AND INSERTS THEREFOR**
SCHNEIDWERKZEUGE UND WERKZEUGEHALTER UND SCHNEIDPLATTEN DAFÜR
OUTILS DE COUPE ET PORTE-OUTILS ET INSERTS POUR CEUX-CI

(43) Date of publication of application: 15.05.2013
(73) Proprietor: Seco Tools AB, 737 82 Fagersta (SE)
(72) Inventor: OLSSON, Henrik, S-737 42 Fagersta (SE)
(74) Representative: Klöfver, Jörgen
(86) International application number: PCT/EP2010/059866
(87) International publication number: WO 2012/003876

(56) References cited:
- DE-B3-102008 037 915
- JP-A- 9 094 705
- US-A- 6 155 754
- US-A1- 2008 095 586
- US-A1- 2008 304 928

## Description

### BACKGROUND AND SUMMARY

The present invention relates generally to cutting tools, toolholders, and cutting inserts, and, more particularly, to such tools, toolholders, and inserts including structures facilitating secure and accurate mounting of cutting inserts on toolholders.

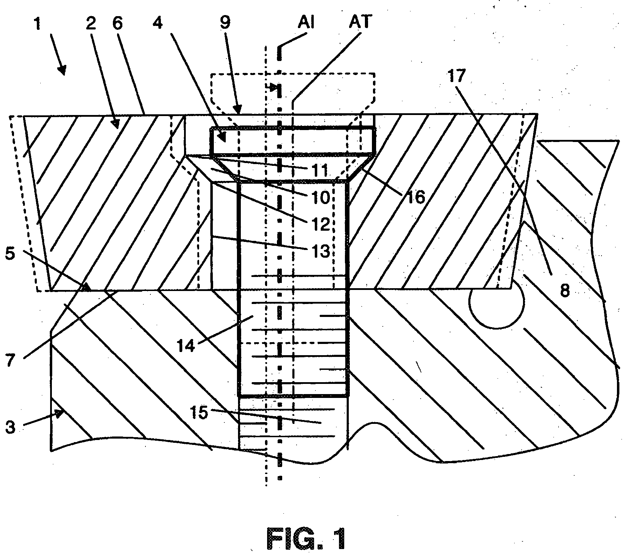

FIG. 1 shows a conventional cutting tool 1 including a cutting insert 2, a toolholder 3, and a screw 4 for clamping the insert relative to an insert-receiving recess 5 in the toolholder. The cutting insert 2 has a top surface 6, a bottom surface 7, and at least one side supporting surface 8 between the top surface and the bottom surface. The insert 2 has a through hole 9 extending between the top surface 6 and the bottom surface 7.

The through hole 9 includes a generally frustoconical portion 10 having a largest end 11 and a smallest end 12. The through hole 9 sometimes includes a generally cylindrical portion 13 having the same diameter as the smallest end 12 of the generally frustoconical portion 10 and extending from a region of intersection with the bottom surface upward toward the smallest end of the generally frustoconical portion. Some inserts, such as the insert disclosed in U.S. Patent No. 6,155,754, on which the preamble of claim 1 is based, include a recess in the bottom surface 7 around the generally cylindrical portion 13 to better ensure a statically well defined abutment between the lower side of the cutting insert and the bottom surface of a cutting insert seat in a toolholder.

When a threaded end 14 of the screw 4 screws into an internally threaded hole 15 in the toolholder 3, a head 16 of the screw contacts the surface of the frustoconical portion 10 of the insert 2 and clamps the insert relative to the toolholder. When the insert 2 is properly mounted in the recess 5 in the toolholder 3, the axis AI of the insert is often offset from the axis AT of the threaded hole 15 and the screw 4. In this way, when the screw 4 is screwed into the threaded hole 15, the head 16 of the screw tends to exert a force on the frustoconical portion 10 of the insert 2 so that the insert is urged from a loose position (shown in phantom) to a mounted position (solid lines) in which side supporting surfaces 8 of the insert are in firm contact with side abutment surfaces 17 of the recess 5. The insert 2 is thereafter held in position in the recess 5 entirely by the clamping force supplied by the screw 4.

Because forces on cutting inserts are severe, screws securing such inserts to cutting tools are subjected to significant stresses. It is desirable to provide a cutting tool, a toolholder, and an insert, that can relieve stresses on a screw securing the insert to the toolholder.

In accordance with an aspect of the present invention, a single-sided indexable cutting insert has the features of claim 1.

In accordance with another aspect of the present invention, a cutting tool comprises an insert as described above together with a toolholder having the features of claim 5.

In accordance with yet another aspect of the present invention, a cutting tool a toolholder comprises the features of claim 14.

### BRIEF DESCRIPTION OF THE DRAWINGS

The features and advantages of the present invention are well understood by reading the following detailed description in conjunction with the drawings in which like numerals indicate similar elements and in which:
FIG. 1 is a schematic, side, partially cross-sectional view of a cutting tool according to the prior art;
FIG. 2A is a schematic, side, partially cross-sectional view of a cutting tool according to an aspect of the present invention, and FIG. 2B is an enlarged view of a portion of FIG. 2A;
FIG. 3A is a schematic, side, partially cross-sectional view of a cutting tool with a double sided insert, and FIG. 3B is an enlarged view of a portion of FIG. 2A;
FIG. 4A is a schematic, plan view of a portion of a toolholder according to an aspect of the present invention, and FIGS. 4B and 4C are cross-sectional views taken at sections 4B-4B and 4C-4C of FIG. 4A, respectively;
FIG. 5 is a schematic, side, partially cross-sectional, enlarged view of a portion of a cutting tool according to another aspect of the present invention.

### DETAILED DESCRIPTION

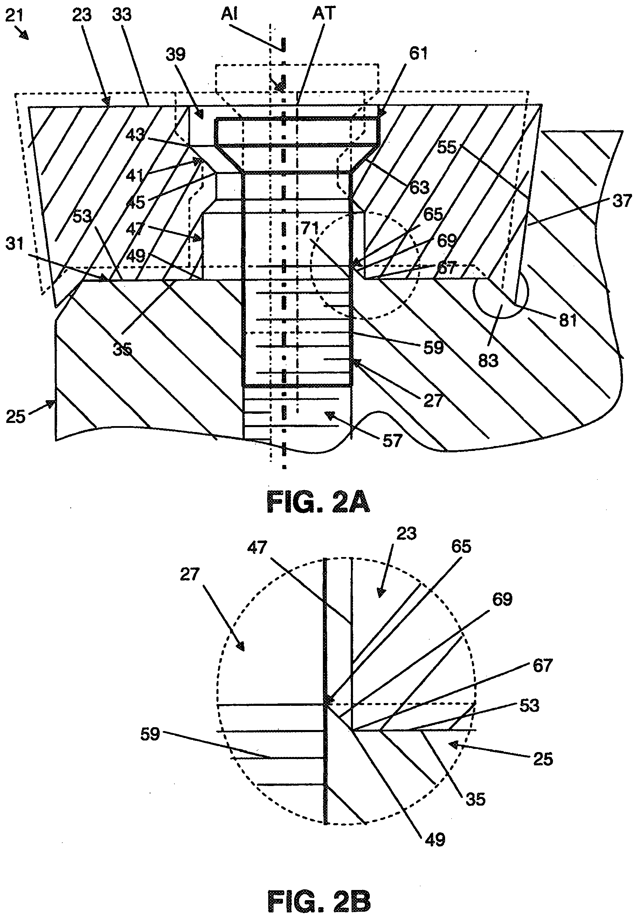

A cutting tool 21 according to an aspect of the present invention is shown in FIGS. 2A and 2B and comprises a cutting insert 23, a toolholder 25, and a screw 27 for clamping the insert relative to an insert-receiving recess 31 in the toolholder. The cutting insert 23 has a top surface 33, a bottom surface 35, and at least one side supporting surface 37 between the top surface and the bottom surface. The insert 23 has a through hole 39 extending between the top surface 33 and the bottom surface 35.

The through hole 39 includes a generally frustoconical portion 41 having a largest end 43 and a smallest end 45. The through hole 39 further includes a generally cylindrical portion 47 (and generally circularly cylindrical) having a larger diameter than the smallest end 45 of the generally frustoconical portion 41 and extending from a region of intersection 49 with the bottom surface 35 upward toward the smallest end of the generally frustoconical portion.

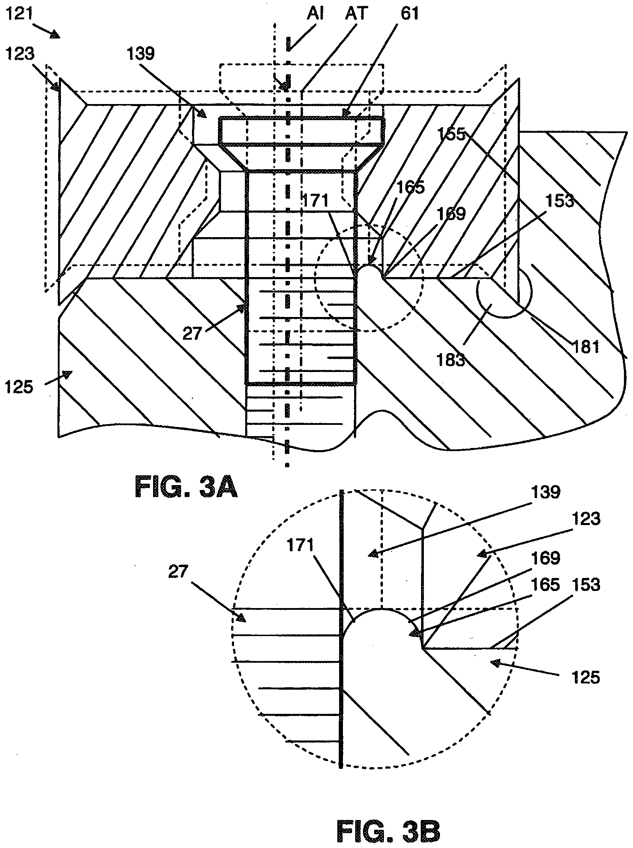

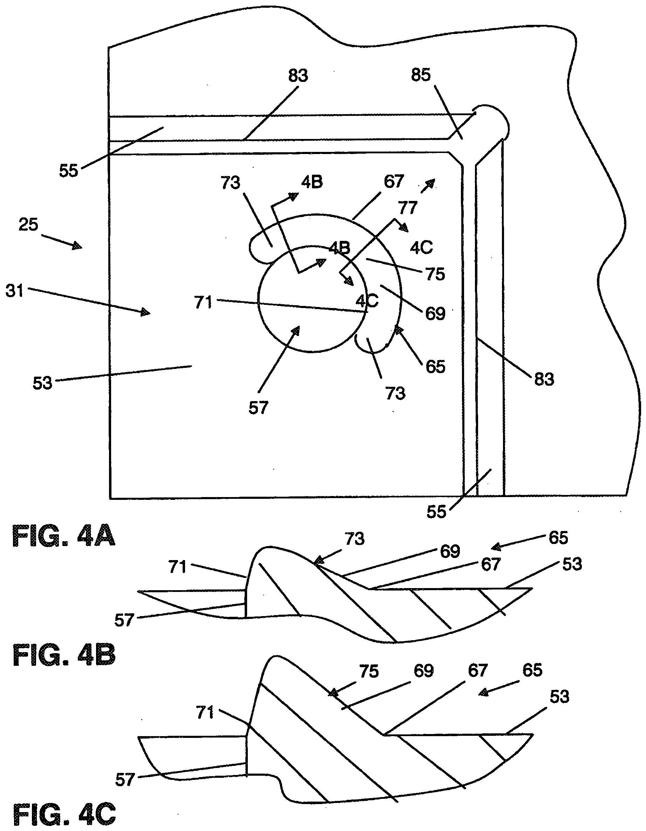

The toolholder 25 ordinarily has the insert-receiving recess 31 therein for receiving the insert 23. The recess 31 comprises a bottom abutment surface 53 and a side abutment surface 55 arranged to abut the bottom surface 35 and the side supporting surface 37 when the insert is received in the insert-receiving recess. Ordinarily, as seen in FIG. 4A, the recess 31 has two side abutment surfaces 55 at angles to each other and the insert 23 has two side supporting surfaces 37 (one shown in FIG. 2A) so that, when the insert is seated in the recess, the insert will contact the recess at at least three distinct regions for stable support of the insert in the recess. At least in the single-sided insert 23 shown in FIG. 2A, the at least one side supporting surface 55 typically forms a non-zero angle with an axis AI of the through hole 39. In a double-sided insert 123 as shown in FIG. 3A, the side supporting surface 155 is often parallel to the axis AI of the through hole 139.

An internally threaded hole 57 with which a threaded end 59 of the screw 27 is adapted to mate extends into the toolholder 25 from the bottom abutment surface 53. A shim (not shown) may be mounted in the recess 31, usually against the bottom abutment surface 53 and a screw (not shown) that secures the shim in the recess may mate with a threaded hole in the toolholder and, often, the shim screw will have an internal thread for receiving a screw for securing the insert relative to the shim. For purposes of illustration of the present invention, however, no shim is illustrated.

The screw 27 has the externally threaded end 59 and a head portion 61 having a larger diameter than the threaded end 59. The head portion 61 is also larger than the smallest end 45 of the generally frustoconical portion 41. The externally threaded end 59 is adapted to extend through the through hole 39 in the insert 23 and mate with the internally threaded hole 57 so that the head portion 61 contacts the generally frustoconical portion 41 and clamps the insert relative to the insert-receiving recess 31. Typically, the bottom surface 63 of the head portion has a generally frustoconical shape that can have the same or close to the same cone angle as the generally frustoconical portion 41 of the through hole 39 to facilitate distribution of clamping forces.

The bottom abutment surface 53 includes a part-circular, such as semi-circular, ridge 65 extending around part of the internally threaded hole 57, when viewing the ridge in a view as in Fig. 4A. A largest radius portion 67, i.e., radially outer portion, of the ridge 65 has a radius equal to or less than a radius of the generally cylindrical portion 47 of the through hole 39 of the insert 23. As seen in, e.g., FIGS. 2A-2B, the ridge 65 is located on the bottom abutment surface 53 in a position that facilitates guiding the insert 23 from a loose position (shown in phantom) into a mounted position (solid lines) with the side supporting surfaces 37 of the insert urged firmly against the side abutment surfaces 53 of the recess 31 when tightening the screw 27 so that the head portion 61 of the screw abuts the generally frustoconical portion 41 and slides along the generally frustoconical portion to a fully tightened position.

A radially outer surface 69 of the ridge 65 defines an obtuse angle with the bottom abutment surface 53 and the insert 23, which contacts the outer surface of the ridge at the intersection region 49 of the generally cylindrical portion 47 of the through hole 39 and the bottom surface 35, slides along the outer surface with minimal resistance to assist in guiding the insert from the loose position to the mounted position as the screw 27 is tightened and the head portion 61 slides along the generally frustoconical portion 41 of the through hole. Once the insert 23 is mounted in the recess 31, the ridge 65 can be useful in absorbing and distributing through the toolholder forces that would otherwise be absorbed largely by the screw 27.

As seen in FIGS. 2A-2B, the radially inner surface 71 of the ridge need not form as shallow of an angle with the bottom abutment surface 53 as the radially outer surface, however, as seen in FIG. 3A-3B, the radially inner surface 171 of the ridge 165 may form the same or similar angle with the bottom abutment surface 153 as the radially outer surface 169. The radially outer surface 69 may be form a substantially constant angle with the bottom abutment surface 53 as seen in FIGS. 2A-2B or, as seen in FIGS. 3A-3B, the angle may vary, such as where the radially outer surface 169 is curved.

The radially outer surface of the ridge will ordinarily form an angle greater than 90° and less than 180° with the bottom abutment surface and, more particularly, will typically form an angle between 120° and 150° with the bottom abutment surface. The closer the angle that the outer surface 69 of the ridge 65 forms with the bottom abutment surface 53 to 90°, the less friction there will be between the intersection region 49 and the outer surface 69 of the ridge that might add to undesirable stresses on the screw 27, however, the less useful the ridge is likely to be in guiding the insert to its mounted position. It will be understood that the generally cylindrical portion 47 may deviate slightly from being cylindrical, such as by being generally frustoconical with a very small cone angle of no more than about 10°, preferably less than 5°, more preferably less than 3°. If the cone angle of the generally cylindrical portion 47 becomes too large, larger friction forces may need to be overcome due to contact between the generally cylindrical portion and the outer surface 69 of the ridge 65, which can place additional stresses on the screw 27.

As seen in FIGS. 4A-4C, end portions 73 (FIGS. 4A and 4B) of the ridge 65 can be lower, relative to the bottom abutment surface 53, than a central portion 75 (FIGS. 4A and 4C) of the ridge. An obtuse angle between the outer portion 69 of the ridge and the bottom abutment surface 53 proximate the end portions 73 can be greater than an obtuse angle between the outer portion of the ridge and the bottom abutment surface proximate the central portion 75. The ridge 65 ordinarily extends around the internally threaded hole 57 through an arc of about 180° or less. The ridge 65 is ordinarily arranged on the bottom abutment surface 53 so that, as the intersection region 49 of the insert 23 slides along the outer surface 69 of the ridge, the insert tends to move toward a proper mounting position with the side supporting surfaces 37 of the insert firmly against the side abutment surfaces 53 of the recess 31. A maximum resultant force between the intersection region 49 and the ridge 65 will ordinarily be oriented in a direction generally toward a corner 77 of the recess 31 or, depending upon other factors, such as how cutting forces will act on the insert, toward some other region of the recess to support the insert in a manner best suited to compensate for the other factors.

As seen, for example, in FIGS. 2A and 3A, the internally threaded hole 57 in the toolholder 25 is ordinarily positioned so that the central axis AT of the hole 57 is offset relative to the central axis AI of the through hole 39 of the insert 23. Ordinarily, the central axis AT of the hole 57 is offset in the direction of the center of the ridge 65 and the corner 77 of the recess 31. In this way, the more the externally threaded end 59 of the screw 27 is threaded into the internally threaded hole 57 in the toolholder 25, contact between the head portion 61 of the screw and the generally frustoconical portion 41 of the through hole 39 will tend to occur at a narrower diameter portion of the generally frustoconical portion along a line or point or, more likely, an arc or limited height and length on the generally frustoconical portion. In this way, as the screw 27 is tightened and the head 61 of the screw 27 slides down the generally frustoconical portion 41 of the through hole 39, the insert 23 will tend to move in response to the force applied by the head of the screw and the side supporting surface(s) 37 of the insert will be urged against the side abutment surface(s) 55.

While both sides of a double-sided insert 121 such as is shown in FIGS. 3A-3B are ordinarily identical and the through hole 139 is symmetrical about a central plane through the insert perpendicular to a central axis AI of the insert, in a single-sided indexable cutting insert as seen in FIGS. 2A-2B, the through hole 39 proximate the top surface 33 can be and ordinarily is different from the through hole proximate the bottom surface 35. For example, the diameter of the through hole 39 at the intersection region 49 may be smaller or larger than the diameter of the through hole proximate the top surface 33 of the insert. The diameter of the through hole 39 proximate the top surface 33 is ordinarily the same as or larger than the diameter of the largest end 43 of the frustoconical portion 41.

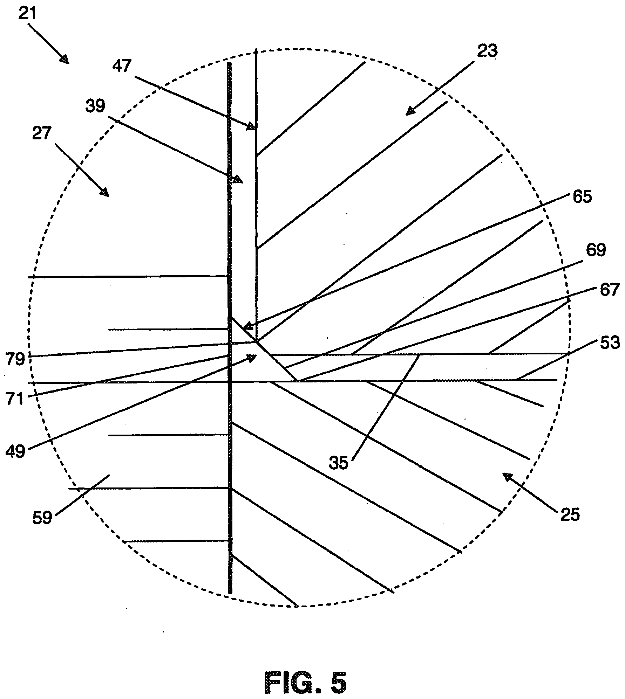

As seen in FIG. 5, the generally cylindrical portion 47 of the through hole 39 can have a chamfer 79 at the intersection region 49. The chamfer 79 can facilitate sliding of the intersection region 49 relative to the outer surface 69 of the ridge 65 by, for example, avoiding having a sharp edge at the intersection region cutting into the outer surface of the ridge and possibly damaging the ridge. However, the chamfer 79 will ordinarily be of very limited axial length, ordinarily less than or equal to one quarter of an axial length of the generally cylindrical portion 47 of the through hole 39 of the insert and ordinarily less than or equal to one third of an axial height of the ridge 65 at its highest point.

As seen, for example, in FIGS. 2A and 3A, the bottom surface 33 or 133 can be recessed relative to at least part of a bottom peripheral edge 81 or 181 surrounding the bottom surface. The bottom peripheral edge 81 or 181 can be received in a cavity 83 or 183 proximate an intersection of the bottom abutment surface 53 and the side abutment surface 55. A further cavity 85 (FIG. 4A) can be provided at an intersection of two side abutment surfaces 55. Even if a bottom peripheral edge of the insert does not protrude beyond a bottom supporting surface, cavities at the intersections of the side abutment surfaces with the bottom abutment surfaces and the side abutment surfaces with the side abutment surfaces are often provided to ensure that there is no material at the corners of the recess to interfere with proper mounting of the insert.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A single-sided indexable cutting insert (23) having a top surface (33), a bottom surface (35) of the insert (23), at least one side supporting surface (37) between the top surface (33) and the bottom surface (35) of the insert (23), and a through hole (39) extending between the top surface (33) and the bottom surface (35) of the insert (23), the through hole (39) including a generally frustoconical portion (41) having a largest end (43) and a smallest end (45), the largest end (43) of the generally frustoconical portion (41) being closer to the top surface (33) than the smallest end (45) of the generally frustoconical portion (41), wherein the through hole (39) comprises a generally cylindrical portion (47) having a larger diameter than the smallest end (45) of the generally frustoconical portion (41) and extending from a region of intersection (49) between the generally cylindrical portion (47) and the bottom surface (35) of the insert (23) upward toward the smallest end (45) of the generally frustoconical portion (41), **characterized in that** the bottom surface (35) and the at least one side supporting surface intersect at a bottom peripheral edge of the insert, and that all of the bottom surface (35) of the insert (23) is recessed relative to the bottom peripheral edge (81) surrounding the bottom surface (35) of the insert (23).

2. The cutting insert (23) as set forth in claim 1, **characterized in that** the generally cylindrical portion (47) has a chamfer (79) at the intersection region (49) of the generally cylindrical portion (47) with the bottom surface (35) of the insert (23).

3. The cutting insert (23) as set forth in claim 2, **characterized in that** an axial length of the chamfer (79) comprises less than or equal to one quarter of an axial length of the generally cylindrical portion (47).

4. The cutting insert (23) as set forth in any of claims 1-3, **characterized in that** the at least one side supporting surface (37) forms a non-zero angle with an axis of the through hole (39).

5. A cutting tool (21) comprising:
the insert (23) as set forth in any of claims 1-4;
a toolholder (25) having an insert-receiving recess (31) therein for receiving the insert (23), the recess (31) comprising a bottom abutment surface (53) and a side abutment surface (55) arranged to abut the bottom surface (35) of the insert (23) and the side supporting surface (37) when the insert (23) is received in the insert-receiving recess (31), an internally threaded hole (57) extending into the tool holder (25) from the bottom abutment surface (53); and
a screw (27) having an externally threaded end (59) and a head portion (61) having a larger diameter than the threaded end (59) and than the smallest end (45) of the generally frustoconical portion (41), the externally threaded end (59) being adapted to extend through the through hole (39) in the insert (23) and mate with the internally threaded hole (57) so that the head portion (61) contacts the generally frustoconical portion (41) and clamps the insert (23) relative to the insert-receiving recess (31), and
the ridge (65) extending around the internally threaded hole (57) through an arc of about 180° or less.

6. The cutting tool (21) as set forth in claim 5, **characterized in that** the bottom abutment surface (53) includes a ridge (65) extending around part of the internally threaded hole (57).

7. The cutting tool (21) as set forth in claim 6, **characterized in that** the ridge (65) is part-circular and comprises an outer surface (69) defining an obtuse angle with the bottom abutment surface (53) and/or **in that** a largest radius portion (67) of the ridge (65) having a radius equal to or less than a radius of the generally cylindrical portion (47).

8. The cutting tool (21) as set forth in any of claims 6-7, **characterized in that** end portions (73) of the ridge (65) are lower, relative to the bottom abutment surface (53), than a central portion (75) of the ridge (65).

9. The cutting tool (21) as set forth in any of claims 5-8, **characterized in that**, when the externally threaded end (59) of the screw (27) is threaded into the internally threaded hole (57) and the head portion (61) of the screw (27) is tightened against the generally frustoconical portion (41), the generally cylindrical portion (47) is urged downward along the outer surface (69) of the ridge (65).

10. The cutting tool (21) as set forth in any of claims 6-9, **characterized in that**, when the generally cylindrical portion (47) is urged downward along the outer surface (69) of the ridge (65), the side supporting surface (37) is urged against the side abutment surface (55).

11. The cutting tool (21) as set forth in any of claims 5-10, **characterized in that** the internally threaded hole (57) is positioned so that the more the externally threaded end (59) of the screw (27) is threaded into the internally threaded hole (57), contact between the head portion (61) and the generally frustoconical portion (41) occurs at a narrower diameter portion of the generally frustoconical portion (41) along a limited arc of the generally frustoconical portion (41) so that the side supporting surface (37) is urged against the side abutment surface (55).

12. The cutting tool (21) as set forth in any of claims 5-11, **characterized in that** the recess (31) comprises a cavity (83) between the side abutment surface (55) and the bottom abutment surface (53), the cavity extending into the toolholder (25) beyond the side abutment surface (55) and the bottom abutment surface (53).

13. The cutting tool (21) as set forth in claim 12, **characterized in that** the bottom surface (35) of the insert (23) of the insert (23) is recessed relative to at least part of a bottom peripheral edge (81) surrounding the bottom surface (35) of the insert (23), and at least part of the bottom peripheral edge (81) is received in the cavity (83).

14. A toolholder (25, 125) having an insert-receiving recess (31) therein for receiving an insert (23, 123), the recess (31) comprising a bottom abutment surface (53, 153) and a side abutment surface (55, 155) arranged to abut a bottom surface (35) of the insert (23, 123) and a side supporting surface (37) of the insert, respectively, when the insert (23, 123) is received in the insert-receiving recess (31), and an internally threaded hole (57) extending into the toolholder (25, 125) from the bottom abutment surface (53, 153),
**characterized in that** the bottom abutment surface (53, 153) includes a part-circular ridge (65) extending around part of the internally threaded hole (57) through an arc of about 180° or less.

15. The toolholder (25, 125) as set forth in claim 14, **characterized in that** the ridge (65) comprises an outer surface (69,169) defining an obtuse angle with the bottom abutment surface (53, 153).

16. The toolholder (25, 125) as set forth in any of claims 14-15, **characterized in that** end portions (73) of the ridge (65) are lower, relative to the bottom abutment surface (53, 153), than a central portion (75) of the ridge (65).

17. The toolholder (25, 125) as set forth in any of claims 14-16, **characterized in that** the obtuse angle that the outer surface (69, 169) defines with the bottom abutment surface (53, 153) is smallest proximate the central portion (75) of the ridge (65) and increases toward the end portions (73) of the ridge.

18. The tool holder (25, 125) as set forth in any of claims 14-17, **characterized in that** the outer surface (69, 169) of the ridge (65) forms a larger angle with the bottom abutment surface (53, 153) than an inner surface (71, 171) of the ridge.

## Patentansprüche

1. Einseitiger indexierbarer Schneideinsatz (23) mit einer oberen Fläche (33) und einer unteren Fläche (35) des Einsatzes (23), mit zumindest einer seitlichen Stützfläche (37) zwischen der oberen Fläche (33) und der unteren Fläche (35) des Einsatzes (23), und einer Durchgangsbohrung (39), die sich zwischen der oberen Fläche (33) und der unteren Fläche (35) des Einsatzes (23) erstreckt, wobei die Durchgangsbohrung (39) einen in etwa kegelstumpfförmigen Abschnitt (41) mit einem größten Ende (43) und einem kleinsten Ende (45) hat, wobei das größte Ende (43) des in etwa kegelstumpfförmigen Abschnittes (41) näher an der oberen Fläche (33) als das kleinste Ende (45) des in etwa kegelstumpfförmigen Abschnittes (41) liegt, wobei die Durchgangsbohrung (39) einen in etwa zylindrischen Abschnitt (47) aufweist, der einen größeren Durchmesser als das kleinste Ende (45) des in etwa kegelstumpfförmigen Abschnittes (41) hat und sich von einem Bereich eines Schnittes (49) zwischen dem in etwa zylindrischen Abschnitt (47) und der unteren Fläche (35) des Einsatzes (23) aus nach oben in Richtung des kleinsten Endes (45) des in etwa kegelstumpfförmigen Abschnittes (41) erstreckt, **dadurch gekennzeichnet, dass** die untere Fläche (35) und die zumindest eine seitliche Stützfläche sich an einem unteren umlaufenden Rand des Einsatzes schneiden, und dass die gesamte untere Fläche (35) des Einsatzes (23) relativ zu dem umlaufenden unteren Rand (81), welcher die Bodenfläche (35) des Einsatzes (23) umgibt, zurückversetzt ist.

2. Schneideinsatz (23) nach Anspruch 1, **dadurch gekennzeichnet, dass** der in etwa zylindrische Abschnitt (47) eine Abschrägung (79) an dem Übergangsbereich (49) des in etwa zylindrischen Abschnittes (47) zu der unteren Fläche (35) des Einsatzes (23) hat.

3. Schneideinsatz (23) nach Anspruch 2, **dadurch gekennzeichnet, dass** eine axiale Länge der Abschrägung (79) weniger oder gleich einem Viertel der axialen Länge des in etwa zylindrischen Abschnittes (47) ist.

4. Schneideinsatz (23) nach einem der Ansprüche 1 bis 3, **dadurch gekennzeichnet, dass** die zumindest eine seitliche Stützfläche (37) einen von Null verschiedenen Winkel mit einer Achse der Durchgangsbohrung (39) bildet.

5. Schneidwerkzeug (21), welches aufweist.
den Einsatz (23) nach einem der Ansprüche 1 bis 4,
einen Werkzeughalter (25), der eine einen Einsatz aufnehmende Aussparung (31) hat, um den Einsatz (23) aufzunehmen, wobei die Aussparung (31) eine untere Anlagefläche (53) und eine seitliche Anlagefläche (55) hat, die so angeordnet sind, dass sie an der unteren Fläche (35) des Einsatzes (23) und der seitlichen Stützfläche (37) anliegen, wenn der Einsatz (23) in der den Einsatz aufnehmenden Aussparung (31) angeordnet ist, wobei sich eine Bohrung (57) mit Innengewinde von der unteren Anlagefläche (53) in das Innere des Werkzeughalters (25) erstreckt, und wobei
eine Schraube (27), die ein Ende (59) mit Außengewinde und einen Kopfabschnitt (61), der einen größeren Durchmesser als das Gewindeende (59) und als das kleinste Ende (45) des in etwa kegelstumpfförmigen Abschnittes (41) hat, wobei das Ende (59) mit Außengewinde dafür ausgelegt ist, sich durch die Durchgangsbohrung (39) in dem Einsatz (23) zu erstrecken und in die Bohrung (57) mit Innengewinde zu passen, so dass der Kopfabschnitt (61) mit dem in etwa kegelstumpfförmigen Abschnitt (41) in Eingriff tritt und den Einsatz (23) relativ zu der den Einsatz aufnehmenden Aussparung (31) festklemmt, und
die Rippe (65) sich um die Innengewindebohrung (57) über einen Bogen von etwa 180° oder weniger erstreckt.

6. Schneidwerkzeug (21) nach Anspruch 5, **dadurch gekennzeichnet, dass** die untere Anlagefläche (53) eine Rippe (65) aufweist, die sich um einen Teil der Innengewindebohrung (57) herum erstreckt.

7. Schneidwerkzeug (21) nach Anspruch 6, **dadurch gekennzeichnet, dass** die Rippe (65) teilkreisförmig ist und eine äußere Fläche (69) aufweist, die einen stumpfen Winkel mit der unteren Anlagefläche (53) definiert und/oder dass ein Abschnitt (67) mit dem größten Radius der Rippe (65) einen Radius hat, der gleich oder kleiner als ein Radius des in etwa zylindrischen Abschnittes (47) ist.

8. Schneidwerkzeug (21) nach Anspruch 6 oder 7, **dadurch gekennzeichnet, dass** Endabschnitte (73) der Rippe (65) relativ zu der unteren Anlagefläche (53) tiefer liegen als ein zentraler Abschnitt (75) der Rippe (65).

9. Schneidwerkzeug (21) nach einem der Ansprüche 5 bis 8, **dadurch gekennzeichnet, dass** dann, wenn das Außengewindeende (59) der Schraube (27) in die Innengewindebohrung (57) eingeschraubt ist und der Kopfabschnitt (61) der Schraube (57) gegen den in etwa kegelstumpfförmigen Abschnitt (41) festgezogen ist, der in etwa zylindrische Abschnitt (47) entlang der äußeren Fläche (69) der Rippe (65) nach unten gedrückt wird.

10. Schneidwerkzeug (21) nach einem der Ansprüche 6 bis 9, **dadurch gekennzeichnet, dass** dann, wenn der in etwa zylindrische Abschnitt entlang der äußeren Fläche (69) der Rippe (65) nach unten gedrückt wird, die seitliche Stützfläche (37) gegen die seitliche Anlagefläche (55) gedrückt wird.

11. Schneidwerkzeug (21) nach einem der Ansprüche 5 bis 10, **dadurch gekennzeichnet, dass** die Innengewindebohrung (57) so angeordnet ist, dass, je mehr das Außengewindeende (59) der Schraube (27) in die Bohrung (57) mit Innengewinde eingeschraubt ist, der Kontakt zwischen dem Kopfabschnitt (61) und dem in etwa kegelstumpfförmigen Abschnitt (41) in einem engeren Durchmesserbereich des in etwa kegelstumpfförmigen Abschnittes (41) entlang eines Begrenzungsbogens des in etwa kegelstumpfförmigen Abschnittes (41) auftritt, so dass die seitliche Stützfläche (37) gegen die seitliche Anlagefläche (55) gedrückt wird.

12. Schneidwerkzeug (21) nach einem der Ansprüche 5 bis 11, **dadurch gekennzeichnet, dass** die Aussparung (31) eine Vertiefung (83) zwischen der seitlichen Anlagefläche (55) und der unteren Anlagefläche (53) aufweist, wobei die Vertiefung sich in den Werkzeughalter (25) über die seitliche Anlagefläche (55) und die untere Anlagefläche (53) hinaus erstreckt.

13. Schneidwerkzeug (21) nach Anspruch 12, **dadurch gekennzeichnet, dass** die untere Fläche (35) des Einsatzes (23) relativ zu zumindest einem Teil des unteren umlaufenden Randes (81), welcher die untere Fläche (35) des Einsatzes (23) umgibt, zurückversetzt ist, und dass zumindest ein Teil des unteren umlaufenden Randes (81) innerhalb der Aussparung (83) aufgenommen ist.

14. Werkzeughalter (25, 125) mit einer einen Einsatz aufnehmenden Aussparung (31), die für die Aufnahme eines Schneideinsatzes (23, 123) vorgesehen ist, wobei die Aussparung (31) eine untere Anlagefläche (53, 153) und eine seitliche Anlagefläche (55, 155) aufweist, die dafür ausgelegt ist, an einer unteren Fläche (35) des Einsatzes (23, 123) bzw. einer seitlichen Stützfläche (37) des Einsatzes anzuliegen, wenn der Einsatz (23, 123) in der den Einsatz aufnehmenden Aussparung (31) aufgenommen ist, sowie eine Bohrung (57) mit Innengwinde, die sich von der unteren Anlagefläche (53, 153) in den Werkzeughalter (25, 125) hinein erstreckt,
**dadurch gekennzeichnet, dass** die untere Anlagefläche (53, 153) eine teilweise kreisförmige Rippe (65) umfasst, die sich um einen Teil der Bohrung (57) mit Innengewinde herum und einen Bogen von etwa 180°oder weniger erstr eckt.

15. Werkzeughalter (25, 125) nach Anspruch 14, **dadurch gekennzeichnet, dass** die Rippe (65) eine äußere Fläche (69, 169) aufweist, die einen stumpfen Winkel mit der unteren Anlagefläche (53, 153) bildet.

16. Werkzeughalter (25, 125) nach einem der Ansprüche 14 oder 15, **dadurch gekennzeichnet, dass** Endabschnitte (73) der Rippe (65) relativ zu der unteren Anlagefläche (53, 153) tiefer liegen als ein zentraler Bereich (75) der Rippe (65).

17. Werkzeughalter (25, 125) nach einem der Ansprüche 14 bis 16, **dadurch gekennzeichnet, dass** der stumpfe Winkel, welchen die äußere Fläche (69, 169) mit der unteren Anlagefläche (53, 153) definiert, in der Nähe des zentralen Bereiches (75) der Rippe (65) am kleinsten ist und in Richtung der Endabschnitte (73) der Rippe zunimmt.

18. Werkzeughalter (25, 125) nach einem der Ansprüche 14 bis 17, **dadurch gekennzeichnet, dass** die äußere Oberfläche (69, 169) der Rippe (65) mit der unteren Anlagefläche (53, 153) einen größeren Winkel bildet als mit einer inneren Fläche (71, 171) der Rippe.

## Revendications

1. Insert de coupe indexable à un seul côté (23) ayant une surface supérieure (33), une surface inférieure (35) de l'insert (23), au moins une surface de support latérale (37) entre la surface supérieure (33) et la surface inférieure (35) de l'insert (23), et un trou traversant (39) s'étendant entre la surface supérieure (33) et la surface inférieure (35) de l'insert, le trou traversant (39) incluant une partie généralement tronconique (41) ayant une extrémité la plus grande (43) et une extrémité la plus petite (45), l'extrémité la plus grande (43) de la partie généralement tronconique (41) étant plus proche de la surface supérieure (33) que l'extrémité la plus petite (45) de la partie généralement tronconique (41), dans lequel le trou traversant (39) comprend une partie généralement cylindrique (47) ayant un diamètre plus grand que l'extrémité la plus petite (45) de la partie généralement tronconique (41) et s'étendant à partir d'une région d'intersection (49) entre la partie généralement cylindrique (47) et la surface inférieure (35) de l'insert (23) vers le haut en direction de l'extrémité la plus petite (45) de la partie généralement tronconique (41), **caractérisé en ce que** la surface inférieure (35) et la au moins une surface de support latérale ont une intersection au niveau d'un bord périphérique inférieur de l'insert, et **en ce que** la totalité de la surface inférieure (35) de l'insert (23) est en creux par rapport au bord périphérique inférieur (81) entourant la surface inférieure (35) de l'insert (23).

2. Insert de coupe (23) selon la revendication 1, **caractérisé en ce que** la partie généralement cylindrique (47) a un chanfrein (79) au niveau de la région d'intersection (49) de la partie généralement cylindrique (47) avec la surface inférieure (35) de l'insert (23).

3. Insert de coupe (23) selon la revendication 2, **caractérisé en ce qu'**une longueur axiale du chanfrein (79) comprend une longueur inférieure ou égale à un quart d'une longueur axiale de la partie généralement cylindrique (47).

4. Insert de coupe (23) selon l'une quelconque des revendications 1 à 3, **caractérisé en ce que** la au moins une surface de support latérale (37) forme un angle non nul avec un axe du trou traversant (39).

5. Outil de coupe (21) comprenant :
l'insert (23) selon l'une quelconque des revendications 1 à 4 ;
un porte-outil (25) ayant un évidement de réception d'insert (31) dans celui-ci pour recevoir l'insert (23), l'évidement (31) comprenant une surface de butée inférieure (53) et une surface de butée latérale (55) disposées pour venir en butée contre la surface inférieure (35) de l'insert (23) et la surface de support latérale (37) lorsque l'insert (23) est reçu dans l'évidement de réception d'insert (31), un trou à filetage interne (57) s'étendant dans le porte-outil (25) à partir de la surface de butée inférieure (53) ; et
une vis (27) ayant une extrémité à filetage externe (59) et une partie de tête (61) ayant un diamètre plus grand que l'extrémité filetée (59) et que l'extrémité la plus petite (45) de la partie généralement tronconique (41), l'extrémité à filetage externe (59) étant destinée à s'étendre à travers le trou traversant (39) dans l'insert (23) et à s'accoupler avec le trou à filetage interne (57) de sorte que la partie de tête (61) soit en contact avec la partie généralement tronconique (41) et serre l'insert (23) par rapport à l'évidement de réception d'insert (31), et
la nervure (65) s'étendant autour du trou à filetage interne (57) sur un arc d'environ 180° ou moins.

6. Outil de coupe (21) selon la revendication 5, **caractérisé en ce que** la surface de butée inférieure (53) inclut une nervure (65) s'étendant autour d'une partie du trou à filetage interne (57).

7. Outil de coupe (21) selon la revendication 6, **caractérisé en ce que** la nervure (65) est partiellement circulaire et comprend une surface extérieure (69) définissant un angle obtus avec la surface de butée inférieure (53) et/ou **en ce qu'**une partie à rayon le plus grand (67) de la nervure (65) a un rayon inférieur ou égal à un rayon de la partie généralement cylindrique (47).

8. Outil de coupe (21) selon l'une quelconque des revendications 6 et 7, **caractérisé en ce que** des parties d'extrémités (73) de la nervure (65) sont plus basses, par rapport à la surface de butée inférieure (53), qu'une partie centrale (75) de la nervure (65).

9. Outil de coupe (21) selon l'une quelconque des revendications 5 à 8, **caractérisé en ce que**, lorsque l'extrémité à filetage externe (59) de la vis (27) est vissée dans le trou à filetage interne (57) et que la partie de tête (61) de la vis (27) est serrée contre la partie généralement tronconique (41), la partie généralement cylindrique (47) est sollicitée vers le bas le long de la surface extérieure (69) de la nervure (65).

10. Outil de coupe (21) selon l'une quelconque des revendications 6 à 9, **caractérisé en ce que**, lorsque la partie généralement cylindrique (47) est sollicitée vers le bas le long de la surface extérieure (69) de la nervure (65), la surface de support latérale (37) est sollicitée contre la surface de butée latérale (55).

11. Outil de coupe (21) selon l'une quelconque des revendications 5 à 10, **caractérisé en ce que** le trou à filetage interne (57) est positionné de sorte que davantage de l'extrémité à filetage externe (59) de la vis (27) soit vissé dans le trou à filetage interne (57), un contact entre la partie de tête (61) et la partie généralement tronconique (41) se produit au niveau d'une partie à diamètre plus étroit de la partie généralement tronconique (41) le long d'un arc limité de la partie généralement tronconique (41) de sorte que la surface de support latérale (37) soit sollicitée contre la surface de butée latérale (55).

12. Outil de coupe (21) selon l'une quelconque des revendications 5 à 11, **caractérisé en ce que** l'évidement (31) comprend une cavité (83) entre la surface de butée latérale (55) et la surface de butée inférieure (53), la cavité s'étendant dans le porte-outil (25) au-delà de la surface de butée latérale (55) et de la surface de butée inférieure (53).

13. Outil de coupe (21) selon la revendication 12, **caractérisé en ce que** la surface inférieure (35) de l'insert (23) est évidée par rapport à au moins une partie d'un bord périphérique inférieur (81) entourant la surface inférieure (35) de l'insert (23), et au moins une partie du bord périphérique inférieur (81) est reçue dans la cavité (83).

14. Porte-outil (25, 125) ayant un évidement de réception d'insert (31) dans celui-ci pour recevoir un insert (23, 123), l'évidement (31) comprenant une surface de butée inférieure (53, 153) et une surface de butée latérale (55, 155) disposées pour venir en butée contre une surface inférieure (35) de l'insert (23, 123) et une surface de support latérale (37) de l'insert, respectivement, lorsque l'insert (23, 123) est reçu dans l'évidement de réception d'insert (31), et un trou à filetage interne (57) s'étendant dans le porte-outil (25, 125) à partir de la surface du butée inférieure (53, 153),
**caractérisé en ce que** la surface de butée inférieure (53, 153) inclut une nervure partiellement circulaire (65) s'étendant autour d'une partie du trou à filetage interne (57) sur un arc d'environ 180° ou moins.

15. Porte-outil (25, 125) selon la revendication 14, **caractérisé en ce que** la nervure (65) comprend une surface extérieure (69, 169) définissant un angle obtus avec la surface de butée inférieure (53, 153).

16. Porte-outil (25, 125) selon l'une quelconque des revendications 14 et 15, **caractérisé en ce que** des parties d'extrémités (73) de la nervure (65) sont plus basses, par rapport à la surface de butée inférieure (53, 153), qu'une partie centrale (75) de la nervure (65).

17. Porte-outil (25, 125) selon l'une quelconque des revendications 14 à 16, **caractérisé en ce que** l'angle obtus que la surface extérieure (69, 169) définit avec la surface de butée inférieure (53, 153) est le plus petit à proximité de la partie centrale (75) de la nervure (65) et augmente en direction des parties d'extrémités (73) de la nervure.

18. Porte-outil (25, 125) selon l'une quelconque des revendications 14 à 17, **caractérisé en ce que** la surface extérieure (69, 169) de la nervure (65) forme un angle plus grand avec la surface de butée inférieure (53, 153) qu'une surface intérieure (71, 171) de la nervure.
